# EUROPEAN PATENT APPLICATION

(11) **EP 2 413 453 A2**
(43) Date of publication of application: **01.02.2012**
(21) Application number: 11006291.6
(22) Date of filing: 29.07.2011
(51) Int. Cl.: H02J 7/00

(54) **Power supply device having precharging circuit for charging capacitor**

(30) Priority: 30.07.2010 JP 2010172808
(71) Applicant: Sanyo Electric Co., Ltd., Osaka 570-8677 (JP)
(72) Inventor: Nakano, Shinya, Moriguchi-shi Osaka, 570-8677 (JP); Yugou, Masaki, Moriguchi-shi Osaka, 570-8677 (JP)
(74) Representative: Hertz, Oliver

(57) **Abstract**

A power supply device includes a battery 1, and an output switch 2, and a precharging circuit 3. The battery 1 includes serially-connected cells 10. The output switch 2 is connected to the output side of the battery 1. The circuit 3 precharges a capacitor 21 connected to the vehicle side. After the capacitor 21 is precharged by the circuit 3, the output switch 2 is turned ON so that electric power can be supplied to the vehicle side. The circuit 3 includes precharging switches 4, and a controller 5. The precharging switches 4 can connect nodes 11 corresponding to the cells 10 to the capacitor 21 so that the capacitor 21 is precharged. The controller 5 controls ON/OFF of the precharging switches 4. The controller 5 turns the precharging switches 4 ON one by one from the lower voltage side to the higher voltage side, in precharging operation.

## Description

### BACKGROUND OF THE INVENTION

### 1. Field of the Invention

The present invention mainly relates to a power supply device, which includes a driving battery for driving a vehicle that is connected to the vehicle through an output switch, and in particular to a power supply device, which includes a pre-charge circuit that previously charges a capacitor with a large capacitance connected to the vehicle prior to turning the output switch ON.

### 2. Description of the Related Art

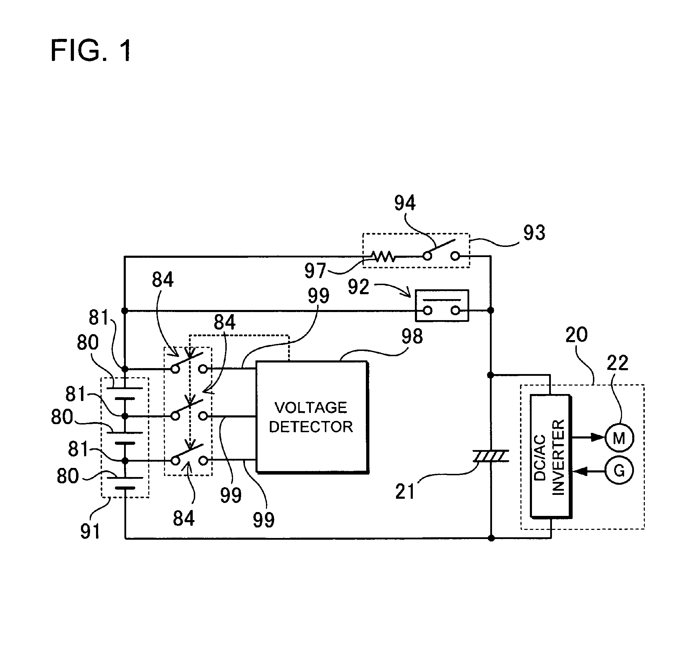

In a vehicle power supply device, as shown in Fig. 1, a contactor 92 as an output switch is connected to the output side of a driving battery 91, which includes a plurality of battery cells 80 serially connected to each other. In the power supply device, the contactor 92 is turned ON so that the driving battery 91 is connected a vehicle. The contactor 92 is turned OFF, when the vehicle is out of operation, for example, when a car ignition switch (not shown) is turned OFF. Also, if the car crashes, the contactor 92 will be turned OFF so that the output of the battery is cut off whereby improving the safety of the car. In addition, the illustrated power supply device includes a voltage detecting circuit 98, which detects the voltages of the battery cells 80. Thus, the battery cells 80 can be charged/discharged under control with protected from being over-charged/over-discharged. In the driving battery 91, nodes 81 corresponding to the plurality of battery cells 80 are connected to the voltage detecting circuit 98 through voltage detection lines 99. A detection switch 84 is connected on each of the voltage detection lines 99. The voltage detecting circuit 98 selectively turns the detection switches 84 ON, and detects the voltages of the battery cells 80 based on the voltages at the nodes 81 provided to the voltage detecting circuit 98.

In the vehicle to which the driving battery 91 is connected, a capacitor 21 with a large capacitance is connected in parallel to a load 20. The reason is to instantaneously supply a large amount of power. The capacitor 21 is charged by the driving battery 91. Since the capacitor 21 has a large capacitance, the charging current of the capacitor 21 will be very large when the capacitor is completely discharged. In the case where the capacitor 21 is not charged, if the contactor 92 is turned ON, a very large amount of charging current will instantaneously flow from the driving battery 91, which in turn causes damage (for example, the movable contact and the fixed contact of the contactor 92 may be melted and joined together). If the contacts are melted and joined together, the contactor 92 cannot be turned OFF. As a result, the driving battery 91 cannot be disconnected from the load 20. In order to prevent this problem, the vehicle power supply device shown in Fig. 1 includes a precharge circuit 93, which precharges the capacitor 21 at a small amount of charging current before the contactor 92 is turned ON.

The precharge circuit 93 is a series circuit composed of a precharge resistor 97 and a precharging switch 94, and is connected in parallel to the contacts of the contactor 92. Before the contactor 92 as an output switch is turned ON, the precharging switch 94 of the precharge circuit 93 is turned ON so that the capacitor 21 is precharged. According to the precharge circuit 93, the capacitor 21 can be precharged with the precharging current being limited by the precharge resistor 97.

It is important for the precharge circuit 93 to precharge the capacitor 21 as short time as possible. The reason is that, as time required for precharging operation is shorter, time gets shorter which is required to be ready to drive the vehicle from when the ignition switch turned ON. If the electric resistance of the precharge resistor of the precharge circuit is set small, the charging time of the capacitor can be shortened. However, if a precharge resistor with small electric resistance is used, a large amount of current will flow so that the Joule heat is increased. For this reason, a resistor with large rated power is used as the precharge resistor which has small electric resistance and high Joule heat resistance. As a result, the size of the precharge resistor is large. Typically, a cement resistor is used as the precharge resistor. On the other hand, in the case where a precharge resistor with small electric resistance is used, since precharging current will be relatively large, the precharging switch is required to be available to be used at large current. Accordingly, in the known power supply device, it is necessary to provide large space for arranging a precharge resistor with a high wattage rating and a precharging switch available to be used at large current, which constitute the precharge circuit. Therefore, there is a problem that the space of the known power supply device cannot be reduced. In addition, since the known power supply device includes a precharge resistor with a high wattage rating and a precharging switch available to be used at large current, there are problems that the component cost will be high, and that heat generation will be large.

In order to solve the above problems, a power supply device has been developed which includes a car-mounted battery separately provided from the driving battery for driving a vehicle, and charges the capacitor with the output of the car-mounted battery, which is gradually increased by a DC/DC converter.

See Japanese Patent Laid-Open Publication No. JP 2009-153245 A

In the power supply device disclosed in Japanese Patent Laid-Open Publication No. JP 2009-153245 A, since voltage for charging the capacitor is gradually increased by controlling the output voltage of the DC/DC converter, it is not necessary to use the precharge resistor and the precharging switch, which have a high wattage rating. However, there is a problem that this power supply device requires the DC/DC converter having complicated circuit construction for precharging the capacitor. Also, in addition to a DC/DC converter, this power supply device requires the additional battery for precharging the capacitor. Also, a charging circuit for charging this additional battery is required. Accordingly, the circuit construction will be more complicated. If an electrical equipment battery serves as the additional battery, such a problem can be solved. However, in the case of circuit construction where the electrical equipment battery precharges the capacitor, the ground line of the high-voltage driving battery will be connected to a chassis ground. Accordingly, the driving battery cannot be insulated from the chassis ground. In hybrid cars or electric vehicles, the high-voltage driving battery is insulated from the chassis ground of a vehicle so that the safety is increased. In the power supply device, which precharges the capacitor by the electrical equipment battery, it is necessary to connect the negative sides of the electrical equipment battery and the driving battery to each other. The electrical equipment battery is connected to the chassis ground of a vehicle. For this reason, in this power supply device, the negative side of the driving battery is connected to the chassis ground.

The present invention has been developed for solving the aforementioned problems. It is an important object of the present invention to provide a power supply device capable of quickly precharging a capacitor without using a precharge resistor and a precharging switch, which have a high wattage rating, and of precharging the capacitor with a driving battery being insulated from a chassis ground.

### SUMMARY OF THE INVENTION

A power supply device according to the present invention includes a battery 1, and an output switch 2, and a precharging circuit 3 or 33. The battery 1 includes a plurality of battery cells 10 that are serially connected to each other. The output switch 2 is connected to the output side of the battery 1. The precharging circuit 3 or 33 precharges a capacitor 21 that is connected to a load to be supplied with electric power from the battery 1. In the power supply device, after the capacitor 21 is precharged by the precharging circuit 3 or 33, the output switch 2 is turned ON so that electric power can be supplied from the battery 1 to the load. The precharging circuit 3 or 33 includes a plurality of precharging switches 4 or 34, and a control circuit 5 or 35. The plurality of precharging switches 4 or 34 can connect nodes 11 corresponding to the plurality of battery cells 10 to the capacitor 21 so that the capacitor 21 is precharged. The control circuit 5 or 35 controls ON/OFF of the plurality of precharging switches 4 or 34. The control circuit 5 or 35 turns the plurality of precharging switches 4 or 34 ON one by one from the precharging switch 3 or 34 that is connected to the node 11 on the lower voltage side to the precharging switch 3 or 34 that is connected to the node 11 on the higher voltage side, when the capacitor 21 is precharged.

According to the thus-constructed power supply device, it is possible to quickly precharge the capacitor without using a precharge resistor and a precharge switch, which have a high wattage rating. In addition, it is possible to precharge the capacitor with the battery being insulated from a chassis ground. The reason is that nodes corresponding to the battery cells of battery are connected one by one from the lower voltage side to the higher voltage side when the capacitor is precharged.

The power supply device according to the present invention can include a voltage detecting circuit 8 or 38 that detects the voltages of the battery cells 10 of the battery 1. This voltage detecting circuit 8 or 38 turns detection switches 14 for detection of the voltages of the battery cells 10 ON so that the battery cells 10 are connected to the input side of the voltage detecting circuit 8 or 38. The detection switches 14 are connected to the capacitor. Thus, the detection switches 14 can serve as the precharging switches 4 or 34.
According to the thus-constructed power supply device, since switches for detection of the voltages of the battery cells are used as the precharging switches, even simple circuit construction can precharge the capacitor without providing switches dedicated to precharging operation.

In the thus-constructed power supply device according to the present invention, the precharging switches 4 or 34 can be connected to the capacitor 21 through a precharging resistor 7 or 37.
According to the thus-constructed power supply device, the capacitor can be precharged with a current being limited flowing through the precharging switch. The reason is that the precharging resistor can limit the current flowing through the precharging switch. In this power supply device, although the precharging resistor is required, the voltage drop by the precharging resistor can be small when the capacitor is precharged. For this reason, the capacitor can be precharged by using a precharging resistor having a small wattage rating (i.e., small watt number).

In the power supply device according to the present invention, the precharging switch 4 can be serially connected to a diode 6.
The thus-constructed power supply device, the battery cell of the battery is not short-circuited through the precharging switch. The capacitor can be safely precharged.

In the power supply device according to the present invention, the precharging switches 4 or 34 can be turned ON by the control circuit 5 or 35 based on the voltage of the capacitor 21, which is detected by the control circuit 5 or 35. Alternatively, the precharging switches 4 can be turned ON by a timer 18.
According to the power supply device in which the precharging switches are controlled based on the detected voltage of the capacitor when the capacitor is precharged, the capacitor can be quickly precharged. Also, according to the power supply device in which the precharging switches are controlled by a timer when the capacitor is precharged, the capacitor can be precharged by simple circuit construction.

In the power supply device according to the present invention, the precharging switch 4 or 34 can be a semiconductor switching element.
The precharging switch of a semiconductor switching element has features such as low cost and space-saving as compared to a contactor or the like, which is a switch having mechanical contacts. In addition, it is possible to increase the reliability. Also, since deterioration will not occur in the precharging switch of a semiconductor switching element, this precharging switch has a feature of long life.
The above and further objects of the present invention as well as the features thereof will become more apparent from the following detailed description to be made in conjunction with the accompanying drawings.

### BRIEF DESCRIPTION OF THE DRAWINGS

Fig. 1 is a schematic diagram showing a known vehicle power supply device;
Fig. 2 is a schematic view showing a vehicle power supply device according to an embodiment of the present invention;
Fig. 3 is a schematic view showing a vehicle power supply device according to another embodiment of the present invention; and
Fig. 4 is a block diagram a power storage type power supply device according to another embodiment of the present invention.

### DETAILED DESCRIPTION OF THE EMBODIMENT(S)

The following description will describe embodiments according to the present invention with reference to the drawings.

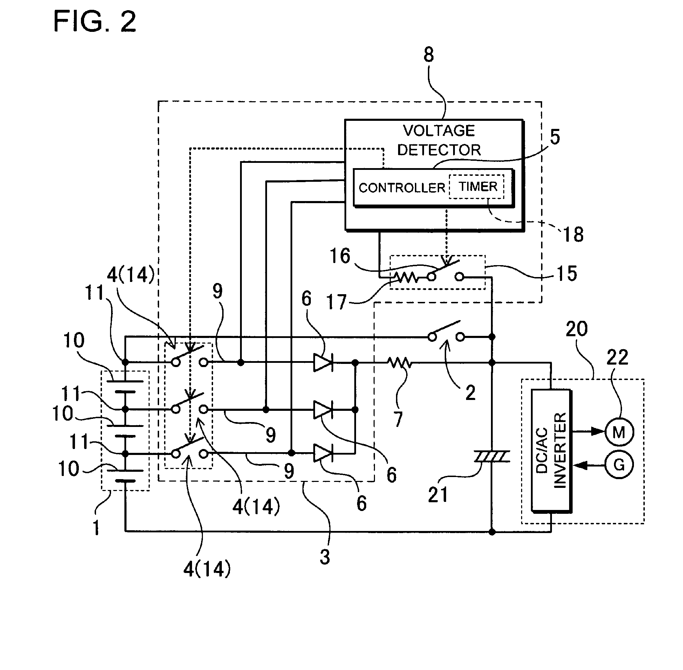

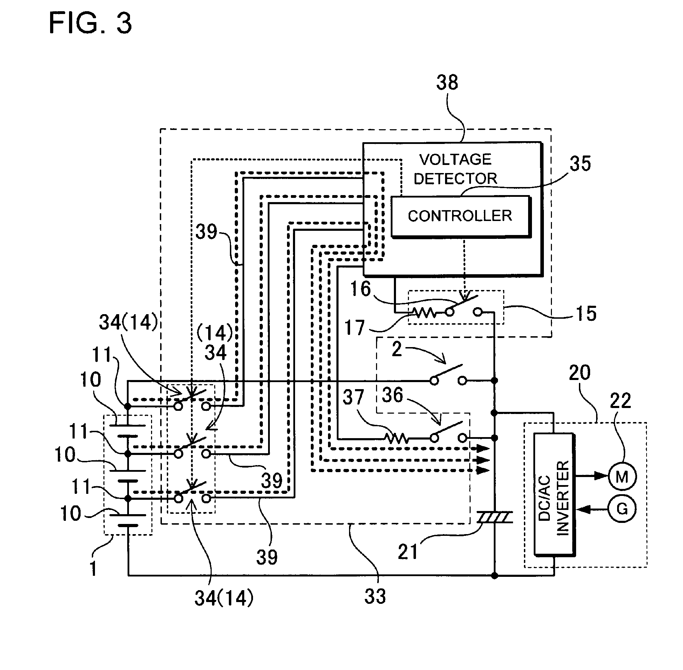

A vehicle power supply device shown in Figs. 2 and 3 is installed in a hybrid car or an electric vehicle, and is connected to an electric motor 22 in a load 20. The electric motor 22 is powered by the vehicle power supply device, and drives the vehicle. This illustrated power supply device includes a driving battery 1, an output switch 2, and a precharging circuit 3 or 33. The output switch 2 is connected to the output side of this driving battery 1, and controls the electric power supplied to the load 20 on the vehicle side. The precharging circuit 3 or 33 precharges a capacitor 21 for the load 20 before the output switch 2 is turned ON.

The vehicle-side load 20 is connected in parallel to the capacitor 21, which has a large capacitance. This capacitor 21 cooperates with the driving battery 1 to supply electric power to the load 20 with the output switch 2 being brought in the ON state. In particular, the capacitor 21 can instantaneously supply a large amount of electric power to the load 20. Since the capacitor 21 is connected in parallel to the driving battery 1, it is possible to increase the available momentary amount of electric power supplied to the load 20. The available amount of electric power supplied to the load 20 from the capacitor 21 1 is proportional to the capacitance of the vehicle-side capacitor 21. For this reason, a capacitor with a very large capacitance (e.g., 4000 to 6000 µF) is used as the capacitor 21. If the discharged large capacitance capacitor 21 is connected to the driving battery 1 with high output voltage, a very large amount of charging current instantaneously flows. The reason is that the impedance of the capacitor 21 is very small.

The driving battery 1 powers the electric motor 22 for driving the vehicle. In order to supply a large amount of electric power to the electric motor 22, the driving battery 1 includes a number of battery cells 10 serially connected to each other. Thus, the output voltage of the driving battery 1 can be high. Nickel metal hydride battery cells or lithium-ion rechargeable battery cells can be used as the battery cells 10. It is noted that any types of rechargeable battery cells including nickel-cadmium battery cell may be used as the battery cells of the power supply device according to the present invention. To supply a large amount of electric power to the electric motor 22, the output voltage of the driving battery 1 can be set at a value of 200 to 400 V, for example. Also, it is noted that, in the case where the load on the vehicle side includes a DC/DC converter (not shown) for increasing the voltage of the battery and supplies electric power at the increased voltage to the electric motor, the voltage of the driving battery can be low even when a large amount of electric power is supplied to the electric motor. In this power supply device, since the output voltage of the driving battery can be low, the number of the serially-connected rechargeable battery cells can be reduced. Accordingly, the output voltage of this driving battery can be set at a value of 100 to 400V, for example.

The precharging circuit 3 or 33 precharges the capacitor 21 by means of the driving battery 1 with the current being limited. After the capacitor 21 is precharged by the precharging circuit 3 or 33, the output switch 2 is turned ON so that the driving battery 1 is connected to the load 20 on the output side. The output switch 2 is controlled by a control circuit (not shown) so that after the capacitor 21 is precharged the output switch 2 is brought into the ON state. The output switch 2 can be a relay type contactor or a semiconductor switching element (e.g., IGBT). The relay type contactor includes an exciting coil and contacts. When a current flows in the exciting coil, the contacts are brought into the contact state so that the relay type contactor is turned ON.

The precharging circuit 3 or 33 shown in Fig. 2 or 3 includes precharging switches 4 or 34, and a control circuit 5 or 35. The precharging switches 4 or 34 are connected to nodes 11 corresponding to the battery cells 10. The control circuit 5 or 35 controls ON/OFF of the precharging switches 4 or 34.

The precharging switches 4 or 34 can connect the nodes 11 corresponding to the battery cells 10 to the capacitor 21 so that the capacitor 21 is precharged. The precharging switches 4 or 34 can be a semiconductor switching element. Examples of semiconductor switching elements can be provided by photo MOS switch and FET. The precharging switches 4 or 34 are connected between the nodes 11 corresponding to the battery cells 10 and the capacitor 21. Thus, the nodes 11 corresponding to the battery cells 10 can be selectively connected to the capacitor 21. The semiconductor switching element is connected between the nodes 11 and the capacitor 21 so that a current can flow toward the capacitor 21 from the nodes 11. In the case where the precharging switches 4 or 34 are constructed of a semiconductor switching element, there are features such as low cost and space-saving. In addition, it is possible to increase the reliability.

In the precharging circuit 3 shown in Fig. 2, each of the precharging switches 4 is serially connected to corresponding one of diodes 6. The diode 6 is connected between the nodes 11 and the capacitor 21 in the direction where a current can flow through the diode 6 toward the capacitor 21 from the nodes 11. In the precharging circuit 3 in which the diode 6 is serially connected to the precharging switch 4, even if the precharging switches 4 are brought in the ON state at the same time, the nodes 11 corresponding to the battery cells 10 are not short-circuited through the precharging switches 4. For this reason, when the precharging circuit 3 precharges the capacitor 21, the precharging switches 4 can be held in the ON state at the same time.

In the precharging circuit 3 shown in Fig. 2, the output side of the diode 6 is connected to the capacitor 21 through the precharging resistor 7. The precharging resistor 7 limits a current flowing through the precharging switch 4. The precharging resistor 7 shown in Fig. 2 can be a resistor having a very small wattage rating (i.e., small watt number) as compared with the precharging resistor 97, which constitutes the precharging circuit 93 in the known power supply device as shown in Fig. 1 in which the driving battery 91 is connected to the capacitor 21 without using the voltage detection lines. The rated power of the precharging resistor 7 is required to correspond to the value, which is proportional to the product of the difference of voltages applied to the both ends of the precharging resistor 7 and the current flowing through the precharging resistor 7. Since the precharging switches 4 are turned ON one by one, the difference of voltages can be small which are applied to the both ends of the precharging resistor 7 shown in Fig. 2. Therefore, the wattage rating (i.e., watt number) of the precharging resistor 7 can be small. The reason to be able to reduce the difference of voltages applied to the both ends of the precharging resistor 7 is that, as the voltage of the capacitor 21 rises when being precharged, one of the nodes 11 connected on the higher voltage side is selectively connected to the capacitor 21 one by one so that the voltage difference between the capacitor 21 and the node 11 can be small. Such a resistor having a very small wattage rating (i.e., small watt number) can reduce space for the precharging circuit, and has a feature of space-saving. However, the precharging resistor is not necessarily required. The reason is that, since the voltage difference of the capacitor 21 and the node 11 can be small, the precharging current of the capacitor 21 can be limited to a small value. For this reason, the output side of the diode may be directly connected to the capacitor to precharge the capacitor. In this case, it is possible to further reduce space for the precharging circuit.

In the precharging circuit 33 shown in Fig. 3, the nodes 11 are connected to the capacitor 21 without using the diodes to precharge the capacitor 21. In this precharging circuit 33, when one of the precharging switches 34 is turned ON, the other of the precharging switches 34 are brought in the OFF state. Thus, the nodes 11 are selectively connected to the capacitor 21 one after another from the lower voltage side to the higher voltage side when the capacitor 21 is precharged.

In the precharging circuit 3 shown in Fig. 2, the capacitor 21 is connected through the precharging resistor 7 to the output sides of the diodes 6. On the other hand, in the precharging circuit 33 shown in Fig. 3, the capacitor 21 is connected through the voltage detecting circuit 38 and the precharging resistor 37 to the output sides of the precharging switches 34. This precharging circuit 33 can precharge the capacitor 21 using voltage detection lines 39 of the voltage detecting circuit 38. In the precharging circuit 33 shown in Fig. 3, a semiconductor switching element 36 is serially connected to the precharging resistor 37. This semiconductor switching element 36 is turned ON at the timing where the capacitor 21 starts being precharged, and is turned OFF when the capacitor 21 is brought into a precharged state. The precharging resistor 37 can be also a resistor having a very small wattage rating (i.e., small watt number) as compared with the known precharging resistor. Therefore, the precharging resistor can be low cost, and results in space-saving. It is noted that the capacitor 21 may be precharged without using the precharging resistor 7 or 37.

In the power supply devices shown in Figs. 2 and 3, the precharging switches 4 and 34 serve as switches for detection of the voltages at the nodes 11 (i.e., the voltages of the battery cells 10), which are detected by the voltage detecting circuits 8 and 38. Also, the voltage detection lines 9 and 39 for detection of the voltages of the battery cells 10 serve as lines through which the capacitor 21 is precharged. Specifically, a part of circuit for detection of the voltages of the battery cells 10 serves as the circuit, which precharges the capacitor 21. In these power supply devices, since the circuit for detection of the voltages of the battery cells 10 serves to precharge the capacitor 21, the circuit construction can be further simplified.

In the vehicle power supply device, which includes the serially-connected battery cells 10 and has high output voltage, the battery cells 10 are charged/discharged under control with being prevented from overcharged/over-discharged. The reason is to prevent that overcharged/over-discharged states cause deterioration of the battery cells 10. The battery cell 10 consists of one storage cell or a plurality of storage cell serially connected to each other. In the case of lithium ion cells, the battery cell consists of one storage cell. In the case of nickel metal hydride cells or nickel-cadmium cells, the battery cell consists of a plurality of storage cells. In the case where the power supply device controls not the entire state of the driving battery 1 but the state of each of the battery cells 10 for prevention of overcharged/over-discharged states, it is possible to prevent deterioration of all of the battery cells 10. Therefore, the life of the driving battery 1 can be increased. In other words, in the case where the driving battery 1 includes a number of battery cells 10, since the driving battery is expensive, in order to suppress deterioration of the driving battery 1 and increase the life of the driving battery 1, the power supply device detects the voltage of each of the battery cells 10 so that the battery cells 10 are prevented one by one from deterioration almost without exception. For this reason, in the power supply device, which uses the circuit for detecting the voltages of the battery cells 10 as a part of the circuit for precharging the capacitor 21, other part of the circuit for precharging the capacitor 21 can be reduced which is dedicated to precharging operation on the capacitor 21. Therefore, it is possible to reduce the cost of the circuit for precharging the capacitor 21.

The control circuit 5 or 35 turns the precharging switches 4 or 34 ON/OFF so that the nodes 11 are connected to the capacitor 21 one by one. Specifically, the control circuit 5 or 35 turns the precharging switches 4 or 34 so that the capacitor 21 is connected to the nodes 11 from the lower voltage side to the higher voltage side one by one when the capacitor 21 is precharged. The detection switches 14 for detection of the voltage of the battery cells 10 are turned ON/OFF by the control circuit 5 or 35 included in the voltage detecting circuit 8 or 38. In the power supply device, which uses the detection switches 14 as the precharging switches 4 or 34, as a control circuit for the precharging switches 4 or 34, the control circuit 5 or 35 can be used which controls ON/OFF of the detection switches 14. It is noted that, although not illustrated, semiconductor switching elements may be provided which are dedicated to the function of the precharging switches without using the detection switches as the precharging switches. Also, a control circuit may be provided which is dedicated to control on the precharging switches and is not included in the voltage detecting circuit.

The precharging switches 4 or 34 are turned ON one by one by the control circuit 5 or 35 based on the voltage of the capacitor 21, which is detected by the control circuit 5 or 35. Alternatively, the precharging switches 4 or 34 are turned ON one by one by a timer 18. In the case where the precharging switches 4 are turned ON based on the detected voltage of the capacitor 21, the precharging circuit 3 or 33 includes a detecting circuit 15 for detection of the voltage of the capacitor 21. The precharging circuit 3 or 33 shown in Fig. 2 or 3 includes the detecting circuit 15, which detects the voltage of the capacitor 21, and ON/OFF of the relay of the output switch or melted junction of the relay. This detecting circuit 15 is a series circuit composed of a capacitor voltage detecting switch 16 and a detecting resistor 17. It is noted that this detecting circuit 15 is not necessarily provided but the semiconductor switching element 36 and the precharging resistor 37 may serve as the detecting circuit 15. In the precharging circuit 3 or 33, the control circuit 5 or 35 detects the voltage of the capacitor 21, and turns the precharging switches 4 or 34 ON one by one. When the voltage difference between the capacitor 21 and one of the nodes 11 in connection reaches one of predetermined values, the control circuit 5 or 35 turns corresponding one of the precharging switches 4 or 34 ON one after another in the precharging operation on the capacitor 21. In other words, in order to keep the voltage difference between the capacitor 21 and one of the nodes 11 in connection not smaller than one of predetermined values, the capacitor 21 is connected to the nodes 11 one by one in increasing order of voltage in the precharging operation on the capacitor 21.

The control circuit 5 can turn the precharging switches 4 ON one by one using the timer 18 shown by the broken line in Fig. 2. The precharging switches 4 are turned ON by the control circuit 5 at timing based on the timer 18. The control circuit 5 connects the capacitor 21 to the nodes 11 one by one in increasing order of voltage at the predetermined timing as the voltage of the capacitor 21 rises in the precharging operation on the capacitor 21.

After the capacitor 21 is precharged, the output switch 2 is turned ON so that the output side of the driving battery 1 is connected to the load 20. Although the output switch 2 is connected only on the positive side of the driving battery 1 in the power supply device shown in Figs. 2 and 3, the output switch can be connected on both the positive and negative sides of the driving battery. In this case, when both the output switches connected to on the positive and negative sides are turned ON, the driving battery is connected to the vehicle-side load. In case of abnormality, both the output switches on the positive and negative sides are turned OFF so that the output voltage of the power supply device is cut off. The output switch connected on the negative side of the driving battery is turned ON when the capacitor is precharged. The output switch on the positive side is turned ON after the capacitor is precharged.

### (Power Storage Type Power Supply Device)

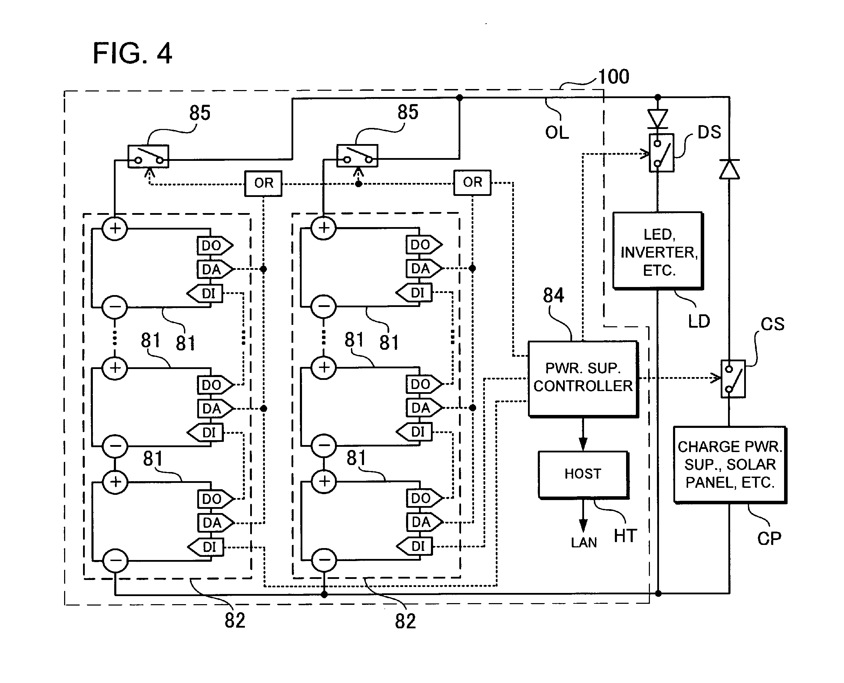

The power supply device can be used not only as power supply of mobile unit such as vehicle but also as stationary power storage. For example, examples of stationary power storage devices can be provided by an electric power system for home use or plant use that is charged with solar electric power or with midnight electric power and is discharged when necessary, a power supply for street lights that is charged with solar electric power during the daytime and is discharged during the nighttime, or a backup power supply for signal lights that drives signal lights in the event of a power failure. Fig. 4 shows a circuit diagram according to this embodiment. This illustrated power supply device 100 includes battery units 82 each of which includes a plurality of battery packs 81 that are connected to each other. In each of battery packs 81, a plurality of battery cells are connected to each other in serial and/or in parallel. The battery packs 81 are controlled by a power supply controller 84. In this power supply device 100, after the battery units 82 are charged by a charging power supply CP, the power supply device 100 drives a load LD. The power supply device 100 has a charging mode and a discharging mode. The load LD and the charging power supply CP are connected to the power supply device 100 through a discharging switch DS and a charging switch CS, respectively. The discharging switch DS and the charging operation switch CS are turned ON/OFF by the power supply controller 84 of the power supply device 100. In the charging mode, the power supply controller 84 turns charging operation switch CS ON, and turns the discharging switch DS OFF so that the power supply device 100 can be charged by the charging power supply CP. When the charging operation is completed so that the battery units are fully charged or when the battery units are charged to a capacity not lower than a predetermined value, if the load LD requests electric power, the power supply controller 84 turns the charging operation switch CS OFF, and turns the discharging switch DS ON. Thus, operation is switched from the charging mode to the discharging mode so that the power supply device 100 can be discharged to supply power to the load LD. In addition, if necessary, the charging operation switch CS may be turned ON, while the discharging switch DS may be turned ON so that the load LD can be supplied with electric power while the power supply device 100 can be charged.

The load LD driven by the power supply device 100 is connected to the power supply device 100 through the discharging switch DS. In the discharging mode of the power supply device 100, the power supply controller 84 turns the discharging switch DS ON so that the power supply device 100 is connected to the load LD. Thus, the load LD is driven with electric power from the power supply device 100. Switching elements such as FET can be used as the discharging switch DS. The discharging switch DS is turned ON/OFF by the power supply controller 84 of the power supply device 100. The power supply controller 84 includes a communication interface for communicating with an external device. In the power supply device according to the embodiment shown in Fig. 4, the power supply controller is connected to a host device HT based on existing communications protocols such as UART and RS-232C. Also, the power supply device may include a user interface that allows users to operate the electric power system if necessary. Each of the battery packs 81 includes signal terminals and power supply terminals. The signal terminals include a pack input/output terminal DI, a pack abnormality output terminal DA, and a pack connection terminal DO. The pack input/output terminal DI serves as a terminal for providing/receiving signals to/from other battery packs and the power supply controller 84. The pack connection terminal DO serves as a terminal for providing/receiving signals to/from other battery packs as slave packs. The pack abnormality output terminal DA serves as a terminal for providing an abnormality signal of the battery pack to the outside. Also, the power supply terminal is a terminal for connecting one of the battery packs 81 to another battery pack in series or in parallel. In addition, the battery units 82 are connected to an output line OL through parallel connection switched 85, and are connected in parallel to each other.

### INDUSTRIAL APPLICABILITY

A power supply device according to the present invention can be suitably used as a charger for charging load battery of electric vehicle, plug-in hybrid car or the like, and can be installed in households or in service stations etc., as a charging infrastructure. Also, this battery charging device can be used as a smart energy system, which manages electric power in home based on smart grid.
It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims.

## Claims

1. A power supply device comprising:
a battery (1) that includes a plurality of battery cells (10) serially connected to each other;
an output switch (2) that is connected to the output side of said battery (1); and
a precharging circuit (3; 33) that precharges a capacitor (21) connected to a load to be supplied with electric power from said battery (1),
wherein after said capacitor (21) is precharged by said precharging circuit (3; 33), the output switch (2) is turned ON so that electric power can be supplied from the battery (1) to the load,
**characterized in that**
said precharging circuit (3; 33) includes a plurality of precharging switches (4; 34) that connect nodes (11) corresponding to the plurality of battery cells (10) to the capacitor (21) so that the capacitor (21) is precharged, and a control circuit (5; 35) that controls ON/OFF of the plurality of precharging switches (4; 34), and
the control circuit (5; 35) turns the plurality of precharging switches (4; 34) ON one by one from the precharging switch (3; 34) that is connected to the node (11) on the lower voltage side to the precharging switch (3; 34) that is connected to the node (11) on the higher voltage side, when the capacitor (21) is precharged.

2. The power supply device according to claim 1 further comprising a voltage detecting circuit (8; 38) that detects the voltages of the battery cells (10) of said battery (1), wherein detection switches (14) are connected to the input side of the voltage detecting circuit (8; 38) for detection of the voltages of the battery cells (10), and wherein the detection switches (14) serve as the precharging switches (4; 34).

3. The power supply device according to claim 1 or 2, wherein said precharging switches (4; 34) are connected to the capacitor (21) through a precharging resistor (7; 37).

4. The power supply device according to any of claims 1 to 3, wherein said precharging switch (4) is serially connected to a diode (6).

5. The power supply device according to any of claims 1 to 4, wherein said precharging switches (4; 34) are turned ON/OFF by said control circuit (5; 35) based on the voltage of the capacitor (21), which is detected by said control circuit (5; 35), or said precharging switches (4) are turned ON/OFF by a timer (18).

6. The power supply device according to any of claims 1 to 5, wherein said precharging switch (4; 34) is a semiconductor switching element.
